(19) Europäisches Patentamt
European Patent Office
Office européen des brevets

(11) EP 4 408 898 B1

(12) EUROPEAN PATENT SPECIFICATION

(45) Date of publication and mention of the grant of the patent:
**30.07.2025 Bulletin 2025/31**

(21) Application number: **22786891.6**

(22) Date of filing: **13.09.2022**

(51) International Patent Classification (IPC):
***C08F 2/00*** *(2006.01)* ***C08L 23/12*** *(2006.01)*

(52) Cooperative Patent Classification (CPC):
(C-Sets available)
**C08F 2/001; C08F 210/06; C08L 23/12;**
C08L 2201/10; C08L 2207/02; C08L 2308/00
(Cont.)

(86) International application number:
**PCT/EP2022/075428**

(87) International publication number:
**WO 2023/046535 (30.03.2023 Gazette 2023/13)**

(54) **PROPYLENE POLYMER COMPOSITION**
PROPYLENPOLYMERZUSAMMENSETZUNG
COMPOSITION DE POLYMÈRE EN PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2021 EP 21199211**

(43) Date of publication of application:
**07.08.2024 Bulletin 2024/32**

(73) Proprietor: **Basell Poliolefine Italia S.r.l.**
**20121 Milano (IT)**

(72) Inventors:
- **TARTARI, Davide**
**44122 Ferrara (IT)**
- **SPATARO, Stefano**
**44122 Ferrara (IT)**
- **NARDIN, Alberto**
**44122 Ferrara (IT)**
- **BASILE, Lelio**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**RU-C1- 2 704 136** **US-B2- 10 557 027**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 110/06, C08F 4/6492;**
**C08F 210/06, C08F 4/651;**
**C08L 23/12, C08L 23/16;**
C08F 110/06, C08F 2500/12, C08F 2500/35;
C08F 210/06, C08F 210/16, C08F 2500/35,
C08F 2500/31, C08F 2500/39

## Description

FIELD OF THE INVENTION

The present disclosure relates to a polypropylene copolymer composition with an improved combination of processability, stiffness and transparency. These compositions may be employed for the production of molded articles, in particular injection molded articles or thermoformed articles such as containers.

BACKGROUND OF THE INVENTION

Injection molded parts such as food packaging and plastic cups place specific requirements on the polymeric materials employed to produce these articles.

Polypropylene-based polymers have many characteristics, which make them suitable for applications such as molded articles, but also pipes, fittings and foams.

Frequently, polypropylene products of high stiffness are based on high molecular weight materials, which are often nucleated by adding nucleating agents, i.e. crystallization starts at a higher temperature and the crystallization speed is high

WO 2008/074423 relates to a polypropylene composition comprising a heterophasic propylene copolymer comprising:

a) a matrix phase (A) comprising a propylene homopolymer and/or a propylene copolymer, and
b) a disperse phase (B) comprising a propylene copolymer rubber dispersed in matrix phase (A), wherein

(i) the polypropylene composition has a melt flow rate MFR2 of 50 g/10min or higher,
(ii) the propylene copolymer rubber of the disperse phase (B) has a comonomer content of 40 wt.% or higher, WO 2008/074423 is completely silent about the haze value and furthermore component (ii) contains an high amount of comonomer.

WO 2018/104092 relates to a polypropylene composition comprising:

A) from 50 wt% to 90 wt%; of a propylene homopolymer having a a MFR L from 0.5 to 200 g/10 min;
B) from 10 wt% to 50wt%; %; of a copolymer of propylene and ethylene having from 30.0 wt% to 70.0wt%, of ethylene derived units;

the sum of the amount of component A) and B) being 100;
the composition having:

i) an intrinsic viscosity of the fraction soluble in xylene at 25 °C comprised between 2.2 and 4.0 dl/g;
ii) a MFR L (from 0.5 to 50 g/10 min;
iii) a xylene soluble fraction ranging from 20 wt% to 50 wt%.

It has now been found that by fine tuning a polypropylene copolymer composition containing propylene homopolymer and propylene ethylene homopolymer it is possible to obtain a copolymer having good mechanical properties and good haze.

SUMMARY OF THE INVENTION

Thus, the present disclosure provides a polypropylene composition comprising: A) From 90.6 wt% to 97.0 wt%; of a propylene homopolymer having a fraction insoluble in xylene at 25°C greater than 90 wt%; and a melt flow rate, MFR, measured according to ISO 1133-1 at 230 °C with a load of 2.16 kg comprised between 40.0 g/10 min and 100.0 g/10 min; B) From 3.0 wt% to 9.4 wt%; of a propylene ethylene copolymer having an ethylene derived units content ranging from 22 wt% to 38 wt%, measured by $^{13}C$ NMR;

said polypropylene composition having:

i) xylene soluble fraction at 25°C ranging from 5.0 wt% to 13.0 wt%;
ii) the ethylene derived units content on the fraction insoluble in xylene at 25°C ranging from 0.3 wt% to 1.6 wt% ,

measured by $^{13}C$ NMR;
iii) the ethylene derived units content on the fraction soluble in xylene at 25°C ranging from 13.2 wt% to 27.0 wt%, measured by $^{13}C$ NMR;
(iv) melt flow rate, MFR, measured according to ISO 1133-1 at 230 °C with a load of 2.16 kg, comprised between 35.0 g/10 min and 70.0 g/10 min;

the sum of the amounts of A) and B) being 100 wt% .

DETAILED DESCRIPTION OF THE INVENTION

Thus, the present disclosure provides a polypropylene composition comprising:

A) from 90.6 wt% to 97.0 wt%; , preferably from 91.0 wt% to 96.0 wt%; more preferably from 91.0 wt% to 95 wt% of a propylene homopolymer having a fraction insoluble in xylene at 25°C greater than 90 wt%; preferably greater than 94 wt%; and a melt flow rate, MFR, measured according to ISO 1133-1 at 230 °C with a load of 2.16 kg comprised between 40.0 g/10 min and 100.0 g/10 preferably comprised between 55.0 g/10 min and 90.0 g/10; more preferably comprised between 70.0 g/10 min and 85.0 g/10 min;
B) from 3.0 wt% to 9.4 wt%; , preferably from 5.0 wt% to 9.3 wt%; more preferably from 7 wt% to 9.0 wt% of a propylene ethylene copolymer having an ethylene derived units content, measured by $^{13}C$ NMR; ranging from 22 wt% to 38 wt%; preferably from 25 wt% to 35 wt%; more preferably 27 wt% to 32 wt%;

said polypropylene composition having:

i) xylene soluble fraction at 25°C ranging from 5.0 wt% to 13.0 wt%; preferably from 6.0 wt% to 12.0 wt%; more preferably from 7.0 wt% to 11.0 wt;
ii) the ethylene derived units content on the fraction insoluble in xylene at 25°C ranging from 0.3 wt% to 1.6 wt%; preferably from 0.4 wt% to 1.5 wt%; more preferably from 0.5 wt% to 1.4 wt%, measured by $^{13}C$ NMR;
iii) the ethylene derived units content on the fraction soluble in xylene at 25°C ranging from 13.2 wt% to 27.0 wt%; preferably from 17.8 wt% to 25.2 wt%; more preferably from 18.2 wt% to 23.4 wt% , measured by $^{13}C$ NMR;
iv) a melt flow rate, MFR, measured according to ISO 1133-1 at 230 °C with a load of 2.16 kg comprised between 35.0 g/10 min and 70.0 g/10 min preferably comprised between 38.0 g/10 min and 65.0 g/10 min; more preferably comprised between 40.0 g/10 min and 60.0 g/10 min;

the sum of the amounts of A) and B) being 100 wt%.

For the present disclosure, the term "copolymer" is referred to polymers containing only two kinds of comonomers, such as propylene and ethylene.
The polypropylene composition of the present disclosure is not subjected to a chemical or physical visbreaking, i.e. the MFR is obtained with the polymerization process.
Preferably in the polypropylene composition the intrinsic viscosity measured on the fraction soluble in xylene at 25°C ranges from 0.9 to 2.3 dl/g; preferably from 1.1 to 2.0 dl/g; more preferably from 1.2 to 1.8 dl/g.
The polypropylene composition according to the present disclosure is preferably characterized by having one or more of the following properties:

a) haze measured on 1 mm plaque lower than 32%; preferably lower than 31%; more preferably lower than 30 %; the higher value being preferably 8 %;
b) flexural modulus higher than 1300 MPa; preferably higher than 1350 MPa; more preferably higher than 1400 MPa the highest value being preferably 2500 MPa;
c) Charpy impact measured at 23°C higher than 4.0 kJ/$m^2$; preferably higher than 4.2 kJ/$m^2$; more preferably higher than 4.0 kJ/$m^2$; the highest value being 50 kJ/$m^2$;
d) the ductile brittle transition temperature (M/B TT) lower than 11°C ; more preferably lower or equal to 10°C; the lowest value being 2°C.
e) the fraction soluble in hexane measured on 100 micron film lower than 2.4 %; preferably lower than 2.3 %, more preferably lower than 2.2 %; the lowest value being 0.5 %.

These features, due to the particular polymerization process used and the particular Ziegler Natta catalyst used in the polymerization, make the polypropylene composition according to the present disclosure particularly fit for the

production of molded articles, in particular injection molded articles or thermoformed articles . The polypropylene composition of the present disclosure is obtained with a polymerization process in two or more stages in which component A) is obtained in the first stages and then component B) is obtained in the second stages in the presence of component A). each stage can be in gas-phase, operating in one or more fluidized or mechanically agitated bed reactors, slurry phase using as diluent an inert hydrocarbon solvent, or bulk polymerization using the liquid monomer (for example propylene) as a reaction medium. Preferably component B) is polymerized in a gas phase process in the presence of component A)

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa. Hydrogen is typically used as a molecular weight regulator.

The polypropylene composition herein disclosed is prepared by a process comprising homopolymerizing propylene in a first stage and then propylene with ethylene in a second stage, both stages being conducted in the presence of a catalyst system comprising the product obtained by contacting (a) a solid catalyst component having average particle size ranging from 15 to 80 μm comprising a magnesium halide, a titanium compound having at least a Ti-halogen bond and at least one electron donor compounds such as succinates and the other being selected from 1,3 diethers, (b) an aluminum hydrocarbyl compound and optionally (c) an external electron donor compound.

Preferably, the succinate present in the solid catalyst component (a) is selected from succinates of formula (I) below

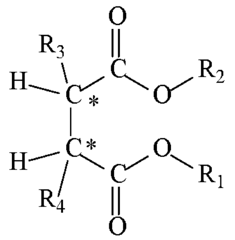

(I)

in which the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the $R_3$ and/or $R_4$ radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Among the 1,3-diethers mentioned above, particularly preferred are the compounds of formula (II)

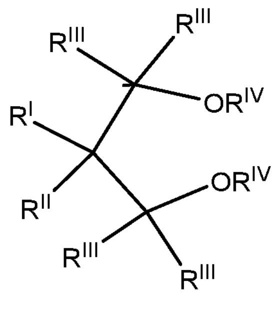

(II)

where $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

Preferably, $R^{IV}$ is a 1-6 carbon atom alkyl radical and more particularly a methyl while the $R^{III}$ radicals are preferably hydrogen. Moreover, when $R^I$ is methyl, ethyl, propyl, or isopropyl, $R^{II}$ can be ethyl, propyl, isopropyl, butyl, isobutyl, tert-butyl, isopentyl, 2-ethylhexyl, cyclopentyl, cyclohexyl, methylcyclohexyl, phenyl or benzyl; when $R^I$ is hydrogen, $R^{II}$ can be ethyl, butyl, sec-butyl, tert-butyl, 2-ethylhexyl, cyclohexylethyl, diphenylmethyl, p-chlorophenyl, 1-naphthyl, 1-decahydronaphthyl; $R^I$ and $R^{II}$ can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (III)

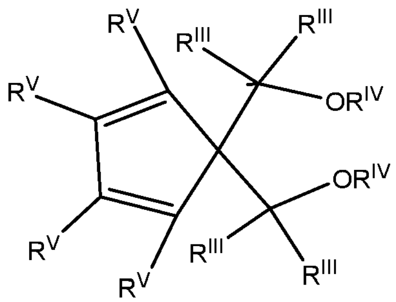

(III)

where the radicals $R^{IV}$ have the same meaning explained above and the radicals $R^{III}$ and $R^V$ radicals, equal or different to each other, are selected from the group consisting of hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals and two or more of the $R^V$ radicals can be bonded to each other to form condensed cyclic structures, saturated or unsaturated, optionally substituted with $R^{VI}$ radicals selected from the group consisting of halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals; said radicals $R^V$ and $R^{VI}$ optionally containing one or more heteroatoms as substitutes for carbon or hydrogen atoms, or both.

Preferably, in the 1,3-diethers of formulae (I) and (II) all the $R^{III}$ radicals are hydrogen, and all the $R^{IV}$ radicals are methyl. Moreover, are particularly preferred the 1,3-diethers of formula (II) in which two or more of the $R^V$ radicals are bonded to each other to form one or more condensed cyclic structures, preferably benzenic, optionally substituted by $R^{VI}$ radicals. Specially preferred are the compounds of formula (IV):

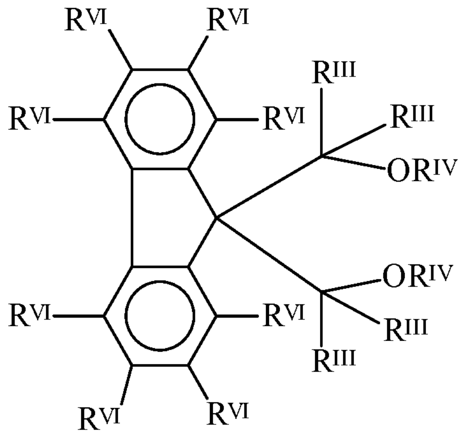

(IV)

where the $R^{VI}$ radicals equal or different are hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ aralkyl radicals, optionally containing one or more heteroatoms selected from the group consisting of N, 0, S, P, Si and halogens, in particular Cl and F, as substitutes for carbon or hydrogen atoms, or both; the radicals $R^{III}$ and $R^{IV}$ are as defined above for formula (III).

Specific examples of compounds comprised in formulae (III) and (IV) are:

1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1--bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethyisilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;

9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

As explained above, the catalyst component (a) comprises, in addition to the above electron donors, a titanium compound having at least a Ti-halogen bond and an Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and TiCls; furthermore, also Ti-haloalcoholates of formula $Ti(OR)_{n-y}X_y$ can be used, where n is the valence of titanium, y is a number between 1 and n-1 X is halogen and R is a hydrocarbon radical having from 1 to 10 carbon atoms.

Preferably, the catalyst component (a) has an average particle size ranging from 20 to 70 μm and more preferably from 25 to 65 μm. As explained the succinate is present in an amount ranging from 50 to 90% by weight with respect to the total amount of donors. Preferably it ranges from 60 to 85%by weight and more preferably from 65 to 80%by weight. The 1,3-diether preferably constitutes the remaining amount.

The aluminum hydrocarbyl compound (b) is preferably an aluminum hydrocarbyl compound in which the hydrocarbyl is selected from $C_3$-$C_{10}$ branched aliphatic or aromatic radicals; preferably it is chosen among those in which the branched radical is an aliphatic one and more preferably from branched trialkyl aluminum compounds selected from triisopropylaluminum, tri-iso-butylaluminum, tri-iso-hexylaluminum, tri-iso-octylaluminum. It is also possible to use mixtures of branched trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 5 to 500, preferably from 5 to 400 and more preferably from 10 to 200.

In step (i) the catalyst forming components are contacted with a liquid inert hydrocarbon solvent such as, e.g., propane, n-hexane or n-heptane, at a temperature below about 60°C and preferably from about 0 to 30°C for a time period of from about six seconds to 60 minutes.

The above catalyst components (a), (b) and optionally (c) are fed to a pre-contacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel can be either a stirred tank or a loop reactor.

Thus high transparency and good mechanical properties can be obtained..

The polypropylene composition of the present disclosure can contain the additives that are commonly used in the art such as anti-oxidants, process stabilizers, slip agents, antistatic agents, antiblock agents, antifog agents and nucleating agents.

The following examples are given to illustrate, not to limit, the present disclosure:

EXAMPLES

**Xylene-soluble (XS) Fraction at 25 °C**

Xylene Solubles at 25°C have been determined according to ISO 16 152; with solution volume of 250 ml, precipitation at 25°C for 20 minutes, 10 of which with the solution in agitation (magnetic stirrer), and drying at 70°C.

**Melt Flow Rate (MFR)**

Measured according to ISO 1133-1 at 230 °C with a load of 2.16 kg, unless otherwise specified.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter, which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

**Determination of the Haze**

Injection molded speciments prepared according to ISO 1873-2, and ISO 294 have been used. The haze value is measured using a Gardner photometric unit connected to a Hazemeter type UX-10 or an equivalent instrument having G.E. 1209 light source with filter "C". Reference samples of known haze are used for calibrating the instrument according to .

**Flexural modulus**

Determined according to IS0 178 and supplemental condition according to ISO 1873-2 with specimen injection moulded.

**Ethylene content in the copolymers**

$^{13}$C NMR spectra were acquired on a Bruker AV-600 spectrometer equipped with cryoprobe, operating at 160.91 MHz in the Fourier transform mode at 120 °C.

The peak of the Sββ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-*d2* at 120 °C with a 8 % wt/v concentration. Each spectrum was acquired with a 90° pulse, and 15 seconds of delay between pulses and CPD to remove $^{1}$H-$^{13}$C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T\beta\beta/S \qquad PPE = 100\ T\beta\delta/S \qquad EPE = 100\ T\delta\delta/S$$

$$PEP = 100\ S\beta\beta/S \qquad PEE = 100\ S\beta\delta/S \qquad EEE = 100\ (0.25\ S\gamma\delta + 0.5\ S\delta\delta)/S$$

$$S = T\beta\beta + T\beta\delta + T\delta\delta + S\beta\beta + S\beta\delta + 0.25\ S\gamma\delta + 0.5\ S\delta\delta$$

The molar percentage of ethylene content was evaluated using the following equation:

E% mol = 100 * [PEP+PEE+EEE]The weight percentage of ethylene content was evaluated using the following equation:

$$E\%\ wt. = \frac{E\%\ mol * MWE}{E\%\ mol * MWE + P\%\ mol * MWP}$$

where P% mol is the molar percentage of propylene content, while MWE and MWP are the molecular weights of ethylene and propylene, respectively.

The product of reactivity ratio rlr2 was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP mm$T_{\beta\beta}$ (28.90-29.65 ppm) and the whole $T_{\beta\beta}$ (29.80-28.37 ppm).

**Charpy impact test**

Charpy impact test has been measured according to ISO 179-1eA, e ISO 1873-2

**Tensile modulus**

Tensile Modulus has been measured according to ISO 527-2, and ISO 1873-2 on injection molded sample

**Hexane extractable on 100 μm film**

Determined according to FDA 177, 1520 by suspending in an excess of hexane a specimen of the composition. The film is prepared by extrusion. The suspension is put in an autoclave at 50°C for 2 hours then the hexane is remove by evaporation and the dried residue is weighted.

**Duttle brittle temperature by DSC**

The temperature has been measured according to ISO 11357-3, at scanning rate of 20C/min both in cooling and heating, on a sample of weight between 5 and 7 mg., under inert N2 flow. Instrument calibration made with Indium.

**Determination of Mg, Ti**

The determination of Mg and Ti content in the solid catalyst component has been carried out via inductively coupled plasma emission spectroscopy on "I.C.P Spectrometer ARL Accuris".

The sample was prepared by analytically weighting, in a "Fluxy" platinum crucible", 0.1÷0.3 grams of catalyst and 2 grams of lithium metaborate/tetraborate 1/1 mixture. After addition of some drops of KI solution, the crucible is inserted in a special apparatus "Claisse Fluxy" for the complete burning. The residue is collected with a 5% v/v $HNO_3$ solution and then analyzed via ICP at the following wavelengths: Magnesium, 279.08 nm; Titanium, 368.52 nm.

**Determination of Bi**

The determination of Bi content in the solid catalyst component has been carried out via inductively coupled plasma emission spectroscopy on "I.C.P Spectrometer ARL Accuris".

The sample was prepared by analytically weighting in a 200 $cm^3$ volumetric flask 0.1÷0.3 grams of catalyst. After slow addition of both ca. 10 milliliters of 65% v/v $HNO_3$ solution and ca. 50 $cm^3$ of distilled water, the sample undergoes a digestion for 4÷6 hours. Then the volumetric flask is diluted to the mark with deionized water. The resulting solution is directly analyzed via ICP at the following wavelength: Bismuth, 223.06 nm.

**Determination of internal donor content**

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

**Examples 1 - Preparation of the Ziegler-Natta solid catalyst**

Preparation of the solid catalyst component

Into a 500 mL four-necked round flask, purged with nitrogen, 250 mL of $TiCl_4$ were introduced at 0 °C. While stirring, 10.0 g of microspheroidal $MgCl_2 \cdot 2.5C_2H_5OH$ having average particle size of 47μm (prepared by thermally dealcoholating a starting adduct obtained according to the procedure of example 1 of WO2012/084735) an amount of diethyl 2,3-diisopropylsuccinate in racemic form such as to have a Mg/succinate molar ratio of 12 was added. The temperature was raised to 100°C and kept at this value for 60min. After siphoning, fresh $TiCl_4$ and an amount of 9,9-bis(methoxymethyl)fluorine (bMMF) such as to have a Mg/(bMMF) molar ratio of 12 were added. Then the temperature was raised to 90°C and kept to this value for for 30min. After siphoning, the treatment with $TiCl_4$ was repeated at 90°C for 30 min the solid was washed six times with anhydrous hexane (6 x 100 ml) at 60 °C and finally dried.

**Prepolymerization treatment**

Before introducing it into the polymerization reactors, the solid catalyst component described above have been contacted with triethyl aluminum (TEAL), no external doors has been used. Then the resulting mixture is subjected to prepolymerization by maintaining it in suspension in liquid propylene at 20 °C for about 5 minutes before introducing it into the polymerization reactor.

**Polymerization**

The polymerization of component A) is carried out in continuous in a series of two reactors equipped with devices to transfer the product from the first reactor to the second one. The polymerization was carried out in gas-phase polymerization reactor comprising two interconnected polymerization zones, a riser and a downcomer, no "barrier stream" has been used

The polymer (A) coming from the first reactor is discharged in a continuous flow and, after having been purged of unreacted monomers, is introduced, in a continuous flow, into the second stirred bed gas phase reactor. In the second reactor a copolymer of ethylene (B) is produced.

Quantities of monomers and hydrogen fed to the polymerization reactor are reported in Table 1.

Table 1

| Example | | 1 box 18 | Comp 2 box 23 | 2 box 31 |
|---|---|---|---|---|
| **PRECONTACT** | | | | |
| Temperature | °C | 15 | 15 | 15 |
| Residence Time | min | 15 | 15 | 15 |
| TEAL/catalyst | wt/wt | 5 | 5 | 5 |
| TEAL/Ext. Donor | g/g | 8 | 9 | 10 |
| **REPOLYMERIZATION** | | | | |
| Temperature | °C | 20 | 20 | 20 |
| Residence Time | min | 8 | 8 | 8 |
| Split | Wt% | 92.0 | 89.8 | 91.0 |
| **POLYMERIZATION Gas loop** | | | | |
| Temperature | bar-g | 66 | 66 | 66 |
| Pressure | bar-g | 27 | 27 | 27 |
| Residence Time | min | 95 | 95 | 95 |
| $H_2/C_3$ riser | mol/mol | 0.038 | 0.038 | 0..038 |
| **Gas phase reactor** | | | | |
| $H_2$/C2$^{--}$ | mol/mol | 0.205 | 0.2015 | 0.205 |
| C2/C2+C3 | mol/mol | 0.097 | 0.103 | 0.095 |

(continued)

| Gas phase reactor | | | | |
|---|---|---|---|---|
| Split | Wt% | 8.0 | 10.2 | 9.0 |
| C3 propylene, C2 ethylene H2 hydrogen | | | | |

The polymer of examples 1 and 3 and comparative example 2 have been characterized as reported in table 2.

Table 2

| | | Ex 1 | Comp ex 2 | Ex3 |
|---|---|---|---|---|
| Component A | | | | |
| MFR | g/10 min | 72 | 81 | 78 |
| Xs | Wt% | 2.1 | 2.1 | 2.1 |
| split | Wt% | 92.0 | 89.8 | 91.0 |
| Component B | | | | |
| split | Wt% | 8.0 | 10.2 | 9.0 |
| Ethylene content | Wt% | 31.4 | 29.5 | 29.6 |
| Total composition | | | | |
| XS | Wt% | 9.0 | 10.9 | 9.7 |
| Intrinsic viscosity xylene solubles 25°C | dl/g | 1.53 | 1.47 | 1.39 |
| Ethylene in the fraction insoluble in xylene at 25°C | Wt% | 0.7 | 1.0 | 0.8 |
| Ethylene in the fraction soluble in xylene at 25°C | Wt% | 21.6 | 19.9 | 20.6 |
| Characterization | | | | |
| Tens mod | MPa | 1560 | 1417 | 1420 |
| Charpy 23°C | $Kj/m^2$ | 4.4 | 4.7 | 4.6 |
| Haze | % | 28.8 | 34.7 | 28.6 |
| M/B TT | °C | >10 | 12.0 | 7.1 |
| hexane extrattable | wt% | 2.0 | 2.4 | 2.1 |

Examples 1 and 3 shows a better haze hexane extractable, and M/B TT with respect to comparative example 2.

## Claims

**1.** A polypropylene composition comprising:

A) From 90.6 wt% to 97.0 wt%; of a propylene homopolymer having a fraction insoluble in xylene at 25°C greater than 90 wt%; and a melt flow rate, MFR, measured according to ISO 1133-1 at 230 °C with a load of 2.16 kg comprised between 40.0 g/10 min and 100.0 g/10 min;
B) From 3.0 wt% to 9.4 wt%; of a propylene ethylene copolymer having an ethylene derived units content ranging from 22 wt% to 38 wt% , measured by $^{13}C$ NMR;

said polypropylene composition having:

i) xylene soluble fraction at 25°C ranging from 5.0 wt% to 13.0 wt%;
ii) the ethylene derived units content on the fraction insoluble in xylene at 25°C ranging from 0.3 wt% to 1.6 wt% measured by $^{13}C$ NMR;;
iii) the ethylene derived units content on the fraction soluble in xylene at 25°C ranging from 17.2 wt% to

27.0 wt%, measured by $^{13}C$ NMR;
(iv) melt flow rate, MFR, measured according to ISO 1133-1 at 230 °C with a load of 2.16 kg, comprised between 35.0 g/10 min and 70.0 g/10 min;

the sum of the amounts of A) and B) being 100 wt% .

2. The polypropylene composition according to claim 1 wherein the propylene composition comprises from 91.0 wt% to 96.0 wt% of component A) or from 5.0 wt% to 9.3 wt% of component B).

3. The polypropylene composition according to anyone of claims 1-2 wherein the xylene soluble fraction at 25 °C ranges from 6.0 wt% to 12.0 wt%.

4. The polypropylene composition according to anyone of claims 1-3 wherein in component A) the melt flow rate, MFR, measured according to ISO 1133-1 at 230 °C with a load of 2.16 kg is comprised between 38.0 g/10 min and 65.0 g/10 min.

5. The polypropylene composition according to anyone of claims 1-4 wherein the intrinsic viscosity measured on the fraction soluble in xylene at 25°C ranges from 0.9 to 2.3 dl/g

6. The polypropylene composition according to anyone of claims 1-5 wherein the ethylene derived units content on the fraction insoluble in xylene at 25°C ranges from 0.4 wt% to 1.5 wt%.

7. The polypropylene composition according to anyone of claims 1-6 wherein the ethylene derived units content on the fraction soluble in xylene at 25°C ranges from 17.8 wt% to 25.2 wt%.

8. The polypropylene composition according to anyone of claims 1-7 wherein the intrinsic viscosity measured on the fraction soluble in xylene at 25°C ranges from 1.1 to 2.0 dl/g.

9. The polypropylene composition according to anyone of claims 1-8 wherein the melt flow rate, MFR, measured according to ISO 1133-1 at 230 °C with a load of 2.16 kg is comprised between 38.0 g/10 min and 65.0 g/10 min.

10. The polypropylene composition according to anyone of claims 1-9 wherein the propylene composition comprises from 91.0 wt% to 95 wt% of component A) and from 7 wt% to 9.0 wt% of component B).

11. The polypropylene composition according to anyone of claims 1-10 wherein the xylene soluble fraction at 25 °C ranges from 7 wt% to 11 wt%.

12. The polypropylene composition according to anyone of claims 1-11 wherein the melt flow rate, MFR, measured according to ISO 1133-1 at 230 °C with a load of 2.16 kg is comprised between 40.0 g/10 min and 60.0 g/10 min.

13. The polypropylene composition according to anyone of claims 1-12 wherein in component A) the melt flow rate, MFR, measured according to ISO 1133-1 at 230 °C with a load of 2.16 kg, ranges from 70.0 g/10 min and 85.0 g/10 min.

14. The polypropylene composition according to anyone of claims 1-13 wherein the intrinsic viscosity measured on the fraction soluble in xylene at 25°C ranges from 1.2 to 1.8 dl/g.

15. An injection molded article comprising the propylene composition of claims 1-14.

## Patentansprüche

1. Polypropylenzusammensetzung, umfassend:

A) 90,6 Gew.% bis 97,0 Gew.% eines Propylenhomopolymers mit einer in Xylol bei 25 °C unlöslichen Fraktion von mehr als 90 Gew.%; und einer gemäß ISO 1133-1 bei 230 °C unter einer Last von 2,16 kg gemessenen Schmelzflussrate, MFR, die zwischen 40,0 g/10 min und 100,0 g/10 min liegt;
B) 3,0 Gew.% bis 9,4 Gew.% eines Propylen/Ethylen-Copolymers mit einem Gehalt an von Ethylen abgeleiteten Einheiten im Bereich von 22 Gew.% bis 38 Gew.%, gemessen mittels $^{13}C$-NMR;

wobei die Polypropylenzusammensetzung aufweist:

i) eine in Xylol bei 25 °C lösliche Fraktion im Bereich von 5,0 Gew.% bis 13,0 Gew.%;
ii) einen Gehalt an von Ethylen abgeleiteten Einheiten in der in Xylol bei 25 °C unlöslichen Fraktion im Bereich von 0,3 Gew.% bis 1,6 Gew.%, gemessen mittels $^{13}$C-NMR;
iii) einen Gehalt an von Ethylen abgeleiteten Einheiten in der in Xylol bei 25 °C löslichen Fraktion im Bereich von 17,2 Gew.% bis 27,0 Gew.%, gemessen mittels $^{13}$C-NMR;
iv) eine gemäß ISO 1133-1 bei 230 °C unter einer Last von 2,16 kg gemessene Schmelzflussrate, MFR, die zwischen 35,0 g/10 min und 70,0 g/10 min liegt;

wobei die Summe der Mengen von A) und B) 100 Gew.% beträgt.

**2.** Polypropylenzusammensetzung nach Anspruch 1, wobei die Propylenzusammensetzung 91,0 Gew.% bis 96,0 Gew.% Komponente A) oder 5,0 Gew.% bis 9,3 Gew.% Komponente B) umfasst.

**3.** Polypropylenzusammensetzung nach einem der Ansprüche 1 bis 2, wobei die in Xylol bei 25 °C lösliche Fraktion im Bereich von 6,0 Gew.% bis 12,0 Gew.% liegt.

**4.** Polypropylenzusammensetzung nach einem der Ansprüche 1 bis 3, wobei in Komponente A) die gemäß ISO 1133-1 bei 230 °C unter einer Last von 2,16 kg gemessene Schmelzflussrate, MFR, zwischen 38,0 g/10 min und 65,0 g/10 min liegt.

**5.** Polypropylenzusammensetzung nach einem der Ansprüche 1 bis 4, wobei die Grenzviskosität, gemessen an der in Xylol bei 25 °C löslichen Fraktion, im Bereich von 0,9 bis 2,3 dl/g liegt.

**6.** Polypropylenzusammensetzung nach einem der Ansprüche 1 bis 5, wobei der Gehalt an von Ethylen abgeleiteten Einheiten in der in Xylol bei 25 °C unlöslichen Fraktion im Bereich von 0,4 Gew.% bis 1,5 Gew.% liegt.

**7.** Polypropylenzusammensetzung nach einem der Ansprüche 1 bis 6, wobei der Gehalt an von Ethylen abgeleiteten Einheiten in der in Xylol bei 25 °C löslichen Fraktion im Bereich von 17,8 Gew.% bis 25,2 Gew.% liegt.

**8.** Polypropylenzusammensetzung nach einem der Ansprüche 1 bis 7, wobei die Grenzviskosität, gemessen an der in Xylol bei 25 °C löslichen Fraktion, im Bereich von 1,1 bis 2,0 dl/g liegt.

**9.** Polypropylenzusammensetzung nach einem der Ansprüche 1 bis 8, wobei die gemäß ISO 1133-1 bei 230 °C unter einer Last von 2,16 kg gemessene Schmelzflussrate, MFR, zwischen 38,0 g/10 min und 65,0 g/10 min liegt.

**10.** Polypropylenzusammensetzung nach einem der Ansprüche 1 bis 9, wobei die Propylenzusammensetzung 91,0 Gew.% bis 95 Gew.% Komponente A) und 7 Gew.% bis 9,0 Gew.% Komponente B) umfasst.

**11.** Polypropylenzusammensetzung nach einem der Ansprüche 1 bis 10, wobei die in Xylol bei 25 °C lösliche Fraktion im Bereich von 7 Gew.% bis 11 Gew.% liegt.

**12.** Polypropylenzusammensetzung nach einem der Ansprüche 1 bis 11, wobei die gemäß ISO 1133-1 bei 230 °C unter einer Last von 2,16 kg gemessene Schmelzflussrate, MFR, zwischen 40,0 g/10 min und 60,0 g/10 min liegt.

**13.** Polypropylenzusammensetzung nach einem der Ansprüche 1 bis 12, wobei in Komponente A) die gemäß ISO 1133-1 bei 230 °C unter einer Last von 2,16 kg gemessene Schmelzflussrate, MFR, im Bereich von 70,0 g/10 min bis 85,0 g/10 min liegt.

**14.** Polypropylenzusammensetzung nach einem der Ansprüche 1 bis 13, wobei die Grenzviskosität, gemessen an der in Xylol bei 25 °C löslichen Fraktion, im Bereich von 1,2 bis 1,8 dl/g liegt.

**15.** Spritzgegossener Artikel, umfassend die Propylenzusammensetzung nach den Ansprüchen 1 bis 14.

## Revendications

**1.** Composition de polypropylène comprenant :

A) 90,6 % en poids à 97,0 % en poids d'un homopolymère de propylène présentant une fraction insoluble dans le xylène à 25 °C supérieure à 90 % en poids ; et un indice de fluidité à chaud, MFR, mesuré selon la norme ISO 1133-1 à 230 °C sous une charge de 2,16 kg, situé entre 40,0 g/10 min et 100,0 g/10 min ;
B) 3,0 % en poids à 9,4 % en poids d'un copolymère de propylène-éthylène présentant une teneur en motifs dérivés de l'éthylène située dans la plage de 22 % en poids à 38 % en poids, mesurée par $^{13}$C-RMN ;

ladite composition de polypropylène présentant :

i) une fraction soluble dans le xylène à 25 °C située dans la plage de 5,0 % en poids à 13,0 % en poids ;
ii) la teneur en motifs dérivés de l'éthylène sur la fraction insoluble dans le xylène à 25 °C située dans la plage de 0,3 % en poids à 1,6 % en poids, mesurée par $^{13}$C-RMN ;
iii) la teneur en motifs dérivés de l'éthylène sur la fraction soluble dans le xylène à 25 °C située dans la plage de 17,2 % en poids à 27,0 % en poids, mesurée par $^{13}$C-RMN ;
(iv) un indice de fluidité à chaud, MFR, mesuré selon la norme ISO 1133-1 à 230 °C sous une charge de 2,16 kg, situé entre 35,0 g/10 min et 70,0 g/10 min ;

la somme des quantités de A) et B) valant 100 % en poids.

**2.** Composition de polypropylène selon la revendication 1, la composition de propylène comprenant 91,0 % en poids à 96,0 % en poids de constituant A) ou 5,0 % en poids à 9,3 % en poids de constituant B).

**3.** Composition de polypropylène selon l'une quelconque des revendications 1 à 2, la fraction soluble dans le xylène à 25 °C étant située dans la plage de 6,0 % en poids à 12,0 % en poids.

**4.** Composition de polypropylène selon l'une quelconque des revendications 1 à 3, dans laquelle, dans le constituant A), l'indice de fluidité à chaud, MFR, mesuré selon la norme ISO 1133-1 à 230 °C sous une charge de 2,16 kg, est situé entre 38,0 g/10 min et 65,0 g/10 min.

**5.** Composition de polypropylène selon l'une quelconque des revendications 1 à 4, la viscosité intrinsèque mesurée sur la fraction soluble dans le xylène à 25 °C étant située dans la plage de 0,9 à 2,3 dl/g.

**6.** Composition de polypropylène selon l'une quelconque des revendications 1 à 5, la teneur en motifs dérivés de l'éthylène sur la fraction insoluble dans le xylène à 25 °C étant située dans la plage de 0,4 % en poids à 1,5 % en poids.

**7.** Composition de polypropylène selon l'une quelconque des revendications 1 à 6, la teneur en motifs dérivés de l'éthylène sur la fraction soluble dans le xylène à 25 °C étant située dans la plage de 17,8 % en poids à 25,2 % en poids.

**8.** Composition de polypropylène selon l'une quelconque des revendications 1 à 7, la viscosité intrinsèque mesurée sur la fraction soluble dans le xylène à 25 °C étant située dans la plage de 1,1 à 2,0 dl/g.

**9.** Composition de polypropylène selon l'une quelconque des revendications 1 à 8, l'indice de fluidité à chaud, MFR, mesuré selon la norme ISO 1133-1 à 230 °C sous une charge de 2,16 kg, étant situé entre 38,0 g/10 min et 65,0 g/10 min.

**10.** Composition de polypropylène selon l'une quelconque des revendications 1 à 9, la composition de propylène comprenant 91,0 % en poids à 95 % en poids de constituant A) et 7 % en poids à 9,0 % en poids de constituant B).

**11.** Composition de polypropylène selon l'une quelconque des revendications 1 à 10, la fraction soluble dans le xylène à 25 °C étant située dans la plage de 7 % en poids à 11 % en poids.

**12.** Composition de polypropylène selon l'une quelconque des revendications 1 à 11, l'indice de fluidité à chaud, MFR, mesuré selon la norme ISO 1133-1 à 230 °C sous une charge de 2,16 kg, étant situé entre 40,0 g/10 min et 60,0 g/10 min.

**13.** Composition de polypropylène selon l'une quelconque des revendications 1 à 12, dans laquelle, dans le constituant A), l'indice de fluidité à chaud, MFR, mesuré selon la norme ISO 1133-1 à 230 °C sous une charge de 2,16 kg, est situé dans la plage de 70,0 g/10 min à 85,0 g/10 min.

**14.** Composition de polypropylène selon l'une quelconque des revendications 1 à 13, la viscosité intrinsèque mesurée sur la fraction soluble dans le xylène à 25 °C étant située dans la plage de 1,2 à 1,8 dl/g.

**15.** Article moulé par injection comprenant la composition de propylène selon les revendications 1-14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008074423 A
- WO 2018104092 A
- US 4298718 A
- US 4495338 A
- WO 2012084735 A


### Non-patent literature cited in the description


- **HUGGINS, M.L.** *J. Am. Chem. Soc.*, 1942, vol. 64, 2716
- **C. J. CARMAN** ; **R. A. HARRINGTON** ; **C. E. WILKES**. Monomer Sequence Distribution in Ethylene-Propylene Rubber Measured by C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with δ-titanium trichloride-diethylaluminum chloride. *Macromolecules*, 1982, vol. 15, 1150
- **C.J. CARMAN** ; **R.A. HARRINGTON** ; **C.E. WILKES**. *Macromolecules*, 1977, vol. 10, 536